# EUROPÄISCHE PATENTSCHRIFT

(11) **EP 2 043 802 B1**
(45) Veröffentlichungstag und Bekanntmachung des Hinweises auf die Patenterteilung: **27.06.2012**
(21) Anmeldenummer: 07787140.8
(22) Anmeldetag: 05.07.2007
(51) Int. Cl.: B22F 1/00, B22F 3/10, C08L 59/00

(54) **BINDEMITTEL ENTHALTENDE THERMOPLASTISCHE MASSEN FÜR DIE HERSTELLUNG METALLISCHER FORMKÖRPER**
THERMOPLASTIC MASSES CONTAINING BINDING AGENTS FOR THE PRODUCTION OF METALLIC MOLDS
MASSES THERMOPLASTIQUES CONTENANT DES LIANTS POUR LA FABRICATION DE CORPS DE MOULE MÉTALLIQUES

(30) Priorität: 13.07.2006 EP 06117157
(43) Veröffentlichungstag der Anmeldung: 08.04.2009
(73) Patentinhaber: BASF SE, 67056 Ludwigshafen (DE)
(72) Erfinder: WOHLFROMM, Hans, 68163 Mannheim (DE); ASSMANN, Jens, 68165 Mannheim (DE); MAAT, Johan Herman Hendrik ter, 68163 Mannheim (DE); BLÖMACHER, Martin, 67149 Meckenheim (DE)
(86) Internationale Anmeldenummer: PCT/EP2007/056857
(87) Internationale Veröffentlichungsnummer: WO 2008/006776

(56) Entgegenhaltungen:
- WO-A-91/04285
- DE-A1- 4 021 741
- DE-A1- 10 019 447
- DE-A1- 19 925 197

## Beschreibung

Die vorliegende Erfindung betrifft Bindemittel für pulverförmige Metalle oder pulverförmige Metalllegierungen, diese Bindemittel enthaltende thermoplastische Massen für die Herstellung metallischer Formkörper, Verfahren zu ihrer Herstellung, ihre Verwendung und Verfahren zur Herstellung von Formkörpern daraus.

Metallische Formkörper können durch Spritzgießen von thermoplastischen Massen hergestellt werden, die neben Metallpulvern ein organisches Bindemittel aufweisen. Es handelt sich um hochgefüllte organische Polymerformmassen. Nach dem Spritzgießen, Extrudieren oder Verpressen der thermoplastischen Masse zu einem Grünkörper wird das organische Bindemittel entfernt, und der erhaltene entbinderte Grünkörper wird gesintert.

EP-A 0 465 940 betrifft derartige thermoplastische Massen für die Herstellung metallischer Formkörper, die neben einem sinterbaren pulverförmigen Metall oder einer pulverförmigen Metalllegierung oder deren Mischungen eine Mischung aus Polyoxymethylenhomo- oder copolymerisaten und einem damit nicht mischbaren Polymerisat als Bindemittel enthalten. Als zusätzliches Polymerisat kommen Polyolefine, insbesondere Polyethylen und Polypropylen, wie auch Polymerisate von Methacrylsäureestern wie PMMA in Betracht. Die Entbinderung kann durch Behandlung in einer gasförmigen säurehaltigen Atmosphäre bei erhöhter Temperatur erfolgen, wobei die Polyoxymethylenhomo- oder copolymerisate depolymerisiert werden, gefolgt von einer thermischen Restentbinderung des nicht mischbaren Polymerisates.

DE 100 19 447 A1 beschreibt Bindemittel für anorganische Materialpulver zur Herstellung metallischer und keramischer Formkörper, wobei diese Bindemittel eine Mischung aus Polyoxymethylenhomo- oder copolymerisaten und einem Polymersystem aus Polytetrahydrofuran und mindestens einem Polymer aus C₂₋₈-Olefinen, vinylaromatischen Monomeren, Vinylestern aliphatischer C₁₋₈-Carbonsäuren, Vinyl-C₁₋₈-alkylethern oder C₁₋₁₂-Alkyl(meth)acrylaten enthalten.

DE-A 40 00 278 betrifft ein Verfahren zur Herstellung eines anorganischen Sinterformteils. Dazu wird ein Gemisch aus einem sinterbaren anorganischen Pulver und Polyoxymethylen als Bindemittel zu einem Grünkörper verformt. Das Bindemittel wird durch Behandeln des Grünkörpers mit einer gasförmigen, Bortrifluorid enthaltenden Atmosphäre entfernt. Anschließend wird der so behandelte Grünkörper versintert. Beispiele für sinterfähige Pulver sind oxidische Keramikpulver wie Al₂O₃, ZrO₂, Y₂O₃, als auch nicht-oxidische Keramikpulver wie SiC, Si₃N₄.

Bei der Herstellung metallischer Formkörper unter Verwendung der aus dem Stand der Technik bekannten Bindemittel treten häufig Entmischungsprobleme auf, insbesondere in Angussnähe, die anschließend wegpoliert werden müssen.

Ferner können Spannungsrisse auftreten, die erst nach dem Sintern sichtbar werden und Defekte der Formkörper darstellen.

Ein weiterer Nachteil der bekannten Bindemittel kann in ihrer nicht immer zufriedenstellenden Fließfähigkeit liegen, sofern sie zu hoch gefüllten thermoplastischen Massen verarbeitet wurden. Insbesondere bei komplexen Spritzgussteilen kann sich hierdurch unter Umständen eine mangelnde Ausfüllung der Form ergeben.

Aufgabe der vorliegenden Erfindung ist daher die Bereitstellung eines verbesserten Bindemittels für pulverförmige Metallpulver, das die Nachteile der bekannten Bindemittel vermeidet. Die Formstabilität der Bauteile soll beim Entbindern erhalten bleiben. Zudem soll auch die hohe Entbinderungsgeschwindigkeit weiterhin gegeben sein.

Die Aufgabe wird erfindungsgemäß gelöst durch ein Bindemittel B) für pulverförmige Metalle oder Metalllegierungen oder deren Mischungen, enthaltend eine Mischung aus
B₁) 50 bis 96 Gew.-% eines oder mehrerer Polyoxymethylenhomo- oder -copolymerisate;
B₂) 2 bis 35 Gew.-% eines oder mehrerer Polyolefine;
B₃) 2 bis 40 Gew.-% Poly-1,3-dioxepan oder Poly-1,3-dioxolan oder deren Mischungen,
wobei die Summe der Gewichtsanteile der Komponenten B₁, B₂ und B₃ 100% ergibt.

Es wurde erfindungsgemäß gefunden, dass durch Verwendung der drei Binderkomponenten B₁), B₂) und B₃) dieses Bindemittel eine verbesserte Fließfähigkeit aufweist und bei der Entbinderung rückstandsfrei entfernt werden kann. So lassen sich insbesondere komplex geformte Spritzgusskörper problemlos herstellen und entbindern.

Die einzelnen Komponenten des Bindemittels B) werden im folgenden näher beschrieben.

Als Komponente B₁) werden Polyoxymethylenhomo- oder -copolymerisate in einer Menge von 50 bis 96 Gew.-%, bevorzugt 60 bis 90 Gew.-%, besonders bevorzugt 70 bis 85 Gew.-%, bezogen auf die Gesamtmenge des Bindemittels B, eingesetzt.

Die Polyoxymethylencopolymere (POM) sind als solche bekannt und handelsüblich. Sie werden üblicherweise durch Polymerisation von Trioxan als Hauptmonomere hergestellt; außerdem werden Comonomere mitverwendet. Bevorzugt sind die Hauptmonomere ausgewählt aus Trioxan und anderen cyclischen oder linearen Formalen bzw. sonstigen Formaldehyd-Quellen.

Die Bezeichnung Hauptmonomere soll ausdrücken, dass der Anteil dieser Monomere an der Gesamtmonomermenge, also der Summe von Haupt- und Comonomeren, größer ist als der Anteil der Comonomere an der Gesamtmonomermenge.

Ganz allgemein weisen derartige POM-Polymere mindestens 50 mol-% an wiederkehrenden Einheiten -CH₂O- in der Polymerhauptkette auf. Geeignete Polyoxymethylencopolymere sind insbesondere solche, die neben den wiederkehrenden Einheiten -CH₂O-noch bis zu 50, vorzugsweise 0,01 bis 20 mol-%, insbesondere 0,1 bis 10 mol-% und ganz besonders bevorzugt 0,5 bis 6 mol-% an wiederkehrenden Einheiten 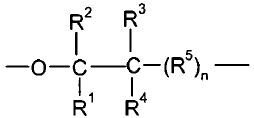 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 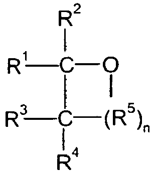 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt. 1,3-Dioxolan und 1,3-Dioxepan sind besonders bevorzugte Comonomere. Ganz besonders bevorzugt ist 1,3-Dioxepan zu nennen.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 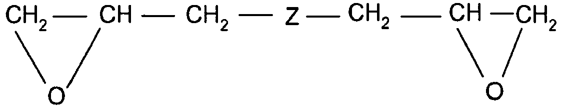 und/oder 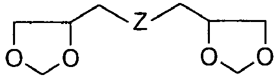 wobei Z eine chemische Bindung, -O-, -ORO- (R gleich C₁- bis C₈-Alkylen oder C₃- bis C₈-Cycloalkylen) ist, hergestellt werden, wie in EP-A 0 465 940 beschrieben.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden überwiegend C-C- oder -O-CH₃- Bindungen aufweisen, werden besonders bevorzugt.

Die bevorzugten Polyoxymethylencopolymere haben Schmelzpunkte von mindestens 150°C und Molekulargewichte (Gewichtsmittelwert) M_{w} im Bereich von 5.000 bis 300.000, bevorzugt von 6.000 bis 150.000, besonders bevorzugt im Bereich von 7.000 bis 60.000. Insbesondere bevorzugt sind POM-Copolymerisate mit einer Uneinheitlichkeit (M_{w}/Mₙ) von 2 bis 15, bevorzugt von 2,5 bis 12, besonders bevorzugt 3 bis 9. Die Messungen erfolgen in der Regel über Gelpermeationschromatographie (GPC) / SEC (size exclusion chromatography), der Mₙ-Wert (Zahlenmittel des Molekulargewichtes) wird im allgemeinen bestimmt mittels GPC/SEC.

Verfahren zur Herstellung der Polyoxymethylenhomo- und -copolymerisate sind dem Fachmann bekannt.

Komponente B₂) umfasst Polyolefine oder deren Mischungen in einer Menge von 2 bis 35 Gew.-%, bevorzugt 3 bis 20 Gew.-%, besonders bevorzugt 4 bis 15 Gew.-%, bezogen auf die Gesamtmenge des Bindemittels B).

Als Polyolefine seien solche mit 2 bis 8 C-Atomen, insbesondere 2 bis 4 C-Atomen genannt sowie deren Copolymerisate. Besonders bevorzugt seien Polyethylen und Polypropylen sowie deren Copolymere genannt, wie sie dem Fachmann bekannt und kommerziell erhältlich sind, beispielsweise unter dem Handelsnamen Lupolen^{®} bzw. Novolen^{®} von der BASF AG.

Die Polymere der Komponente B₂) können nach an sich bekannten Polymerisationsverfahren, vorzugsweise radikalisch, beispielsweise durch Emulsions-, Perl-, Lösungs-oder Substanzpolymerisation hergestellt werden. Als Initiator kommen, abhängig von den Monomeren und dem Polymerisationstyp, Radikal-Initiatoren wie Peroxyverbindungen und Azoverbindungen in Betracht, wobei die Initiatormengen im allgemeinen im Bereich von 0,001 bis 0,5 Gew.-%, bezogen auf die Monomeren, liegen. Geeignete Polymerisationsverfahren sind in EP-A-0 465 940 beschrieben.

Als Komponente B₃) geeignet sind Poly-1,3-dioxepan -O-CH₂-O-CH₂-CH₂-CH₂-CH₂, Poly-1,3-dioxolan -O-CH₂-O-CH₂-CH₂- oder deren Mischungen in einer Menge von 2 bis 40 Gew.-%, bevorzugt 5 bis 30 Gew.-%, besonders bevorzugt 10 bis 26 Gew.-%, bezogen auf die Gesamtmenge des Bindemittels B. Poly-1,3-dioxepan wird wegen seiner schnellen Depolymerisation unter sauren Bedingungen besonders bevorzugt.

Poly-1,3-dioxepan und Poly-1,3-dioxolan können nach analogen Verfahren wie die Polyoxymethylenhomo- bzw. -copolymerisate hergestellt werden, so dass sich hier nähere Angaben erübrigen. Das Molekulargewicht (Gewichtsmittelwert) liegt im Bereich von 10.000 bis 150.000, bevorzugt (im Falle von Poly-1,3-dioxepan) im Bereich von 15.000 bis 50.000, besonders bevorzugt (im Falle von Poly-1,3-dioxepan) im Bereich von 18.000 bis 35.000) und bevorzugt (im Falle von Poly-1,3-dioxolan) 30.000 bis 120.000, besonders bevorzugt (im Falle von Poly-1,3-dioxolan) 40.000 bis 110.000.

Unter den Bedingungen der Compoundierung oder Spritzgussverarbeitung tritt zwischen den Polyoxymethylenpolymerisaten B₁) und B₃) praktisch keine Umacetalisierung ein, d. h. es findet praktisch kein Austausch von Comonomereinheiten statt.

Die erfindungsgemäßen Bindemittel B) werden in thermoplastischen Massen für die Herstellung metallischer Formkörper eingesetzt.

Gegenstand der Erfindung sind daher auch thermoplastische Massen für die Herstellung metallischer Formkörper, enthaltend
A) 40 bis 70 Vol.-%, bevorzugt 45 bis 65 Vol.-%, besonders bevorzugt 50 bis 60 Vol.-% eines sinterbaren pulverförmigen Metalls oder einer sinterbaren pulverförmigen Metalllegierung oder deren Mischungen,
B) 30 bis 60 Vol.-%, bevorzugt 35 bis 55 Vol.-%, besonders bevorzugt 40 bis 50 Vol.-% einer Mischung aus
   B₁) 50 bis 96 Gew.-%, bevorzugt 60 bis 90 Gew.-%, besonders bevorzugt 70 bis 85 Gew.-% eines oder mehrerer Polyoxymethylenhomo- oder -copolymerisate, bevorzugt ein Polyoxymethylencopolymerisat mit 0,01 bis 20 mol-% 1,3-Dioxepan oder 1,3-Dioxolan als Comonomer;
   B₂) 2 bis 35 Gew.-%, bevorzugt 3 bis 20 Gew.-%, besonders bevorzugt 4 bis 15 Gew.-% eines oder mehrerer Polyolefine, bevorzugt Polyethylen;
   B₃) 2 bis 40 Gew.-%, bevorzugt 5 bis 30 Gew.-%, besonders bevorzugt 10 bis 26 Gew.-% Poly-1,3-dioxepan oder Poly-1,3-dioxolan oder deren Mischungen, bevorzugt Poly-1,3-dioxepan
   als Bindemittel, wobei die Summe der Gewichtsanteile der Komponenten B₁), B₂) und B₃) 100% ergibt, und
C) 0 bis 5 Vol.-% eines Dispergierhilfsmittels,
wobei die Summe der Komponenten A), B) und C) 100 Vol-% ergibt.

Als Metalle, die in Pulverform vorliegen können, seien beispielsweise Aluminium, Eisen, insbesondere Eisencarbonylpulver, Kobalt, Kupfer, Nickel, Silicium, Titan und Wolfram genannt. Als pulverförmige Metalllegierungen sind beispielsweise hoch- oder niederlegierte Stähle sowie Metalllegierungen auf der Basis von Aluminium, Eisen, Titan, Kupfer, Nickel, Kobalt oder Wolfram zu nennen. Dabei können sowohl Pulver von bereits fertigen Legierungen als auch die Pulvermischungen der einzelnen Legierungsbestandteile eingesetzt werden. Die Metallpulver, Metalllegierungspulver und Metallcarbonylpulver können auch im Gemisch eingesetzt werden.

Die Korngrößen der Pulver betragen vorzugsweise 0,1 bis 80 µm, besonders bevorzugt 1,0 bis 50 µm.

Aufgrund der hohen Fließfähigkeit des erfindungsgemäßen Bindemittels ist eine hohe Beladung des Bindemittels mit dem Pulver A) möglich, ohne dass die Fließfähigkeit zu stark beeinträchtigt wird.

Das als Komponente C) gegebenenfalls vorliegende Dispiergierhilfsmittel kann aus bekannten Dispergierhilfsmitteln ausgewählt sein. Beispiele sind oligomeres Polyethylenoxid mit einem mittleren Molekulargewicht von 200 bis 600, Stearinsäure, Stearinsäureamid, Hydroxystearinsäure, Fettalkohole, Fettalkoholsulfonate und Blockcopolymere von Ethylen- und Propylenoxid, wie auch besonders bevorzugt Polyisobutylen. Besonders bevorzugt wird Polyisobutylen in einer Menge von 1 bis 6 Vol-%, bezogen auf die Komponenten A), B) und C), eingesetzt.

Zusätzlich können die thermoplastischen Massen auch übliche Zusatzstoffe und Verarbeitungshilfsmittel, die die rheologischen Eigenschaften der Mischungen bei der Formgebung günstig beeinflussen, enthalten.

Die Herstellung der erfindungsgemäßen thermoplastischen Massen erfolgt erfindungsgemäß durch Aufschmelzen der Komponente B) und Einmischen der Komponenten A) und gegebenenfalls C). Beispielsweise kann die Komponente B) in einem Zweischneckenextruder bei Temperaturen von vorzugsweise 150 bis 220 °C, insbesondere 170 bis 200 °C aufgeschmolzen werden. Die Komponente A) wird anschließend bei Temperaturen im gleichen Bereich in der erforderlichen Menge zu dem Schmelzestrom der Komponente B) dosiert. Vorteilhafterweise enthält die Komponente A) auf der Oberfläche das oder die Dispergierhilfsmittel C). Die Herstellung der erfindungsgemäßen thermoplastischen Massen kann aber auch durch Aufschmelzen der Komponenten B) und C) in Gegenwart der Komponente A) bei Temperaturen von 150 bis 220 °C erfolgen.

Eine besonders bevorzugte Vorrichtung zur Dosierung der Komponente A) enthält als wesentliches Element eine in einem heizbaren Metallzylinder befindliche Förderschnecke, die die Komponente A) in die Schmelze der Komponente B) fördert. Das vorstehend beschriebene Verfahren hat gegenüber der Mischung der Komponenten bei Raumtemperatur und anschließender Extrusion unter Temperaturerhöhung den Vorteil, dass eine Zersetzung des als Bindemittel eingesetzten Polyoxymethylens infolge der bei dieser Variante auftretenden hohen Scherkräfte weitgehend vermieden wird.

Die erfindungsgemäßen thermoplastischen Massen können zur Herstellung von metallischen Formkörpern aus dem Pulver A) verwendet werden.

Die vorliegende Erfindung betrifft daher auch ein Verfahren zur Herstellung von Formkörpern aus den vorstehend beschriebenen thermoplastischen Massen durch
a) Verformen der thermoplastischen Masse durch Spritzgießen, Extrudieren oder Verpressen zu einem Grünkörper,
b) Entfernen des Bindemittels durch Behandeln des Grünkörpers bei einer Temperatur im Bereich von 20 bis 180°C für 0,1 bis 24 Stunden mit einer gasförmigen säurehaltigen Atmosphäre,
c) nachfolgendes Erhitzen für 0,1 bis 12 Stunden auf eine Temperatur im Bereich von 250 bis 600 °C und
d) nachfolgendes Sintern des so erhaltenen entbinderten Grünkörpers.

Für die Formgebung durch Spritzguss können die üblichen Schnecken- und Kolbenspritzgussmaschinen eingesetzt werden. Die Formgebung erfolgt im allgemeinen bei Temperaturen von 175 bis 200 °C und Drücken von 3.000 bis 20.000 kPa in Formen, die eine Temperatur von 60 bis 120°C aufweisen.

Die Extrusion zu Rohren, Stangen und Profilen erfolgt vorzugsweise bei Temperaturen von 170 bis 200°C.

Zur Entfernung des Bindemittels werden die nach der Formgebung erhaltenen Grünkörper mit einer gasförmigen, säurehaltigen Atmosphäre behandelt. Entsprechende Verfahren sind beispielsweise in DE-A 39 29 869 und DE-A 40 00 278 beschrieben. Diese Behandlung erfolgt erfindungsgemäß vorzugsweise bei Temperaturen im Bereich von 20 bis 180°C über einen Zeitraum von vorzugsweise 0,1 bis 24 Stunden, vorzugsweise 0,5 bis 12 Stunden.

Geeignete Säuren für die Behandlung in dieser ersten Stufe des erfindungsgemäßen Verfahrens sind beispielsweise anorganische, bei Raumtemperatur bereits gasförmige, zumindest aber bei der Behandlungstemperatur verdampfbare Säuren. Beispiele sind Halogenwasserstoffsäuren und Salpetersäure. Geeignete organische Säuren sind solche, die bei Normaldruck eine Siedetemperatur von weniger als 130°C aufweisen, wie Ameisensäure, Essigsäure, Oxalsäure oder Trifluoressigsäure und deren Mischungen.

Weiterhin können als Säure BF₃ und dessen Addukte an anorganische Ether eingesetzt werden. Die erforderliche Behandlungsdauer hängt von der Behandlungstemperatur und der Konzentration der Säure in der Behandlungsatmosphäre wie auch von der Größe des Formkörpers ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden. Bevorzugt wird die Säure über eine Dosiereinrichtung dem Trägergas zugemischt und die Mischung soweit erwärmt, dass die Säure nicht mehr kondensieren kann.

Die Säurebehandlung wird vorzugsweise solange durchgeführt, bis der Polyoxymethylenanteil des Bindemittels zumindestens 80 Gew.-%, vorzugsweise mindestens 90 Gew.-% entfernt ist. Dies läßt sich beispielsweise anhand der Gewichtsabnahme überprüfen. Anschließend wird das so erhaltene Produkt vorzugsweise für 0,1 bis 12, besonders bevorzugt 0,3 bis 6 Stunden auf eine Temperatur von vorzugsweise 250 bis 700°C, besonders bevorzugt 250 bis 600 °C erhitzt, um den vorhandenen Rest des Bindemittels vollständig zu entfernen.

Das so vom Bindemittel befreite Produkt kann in üblicher Weise durch Sintern in den gewünschten Formkörper, insbesondere metallischen oder keramischen Formkörper überführt werden.

Die erfindungsgemäßen thermoplastischen Massen weisen neben der rückstandsfreien Entbinderung, der hohen Fließfähigkeit und hohen Beladbarkeit mit den Pulvern A) zudem den Vorteil auf, dass die daraus hergestellten Grünkörper bzw. metallischen oder keramischen Formkörper auch bei großen Wandstärken frei von Rissen und Poren sind. Zudem liegt ein Vorteil darin, dass die Entfernung des Bindemittels in zwei Stufen erfolgen kann. Zunächst wird das Polyoxymethylen bei relativ niedrigen Temperaturen durch hydrolytischen Abbau entfernt, wobei der größte Teil des Polymersystems B₂) verbleibt. Die danach erhaltenen Produkte (Braunkörper) sind relativ stabil und können problemlos gehandhabt oder transportiert werden. Die Entfernung des Restes des Polymersystems B₂) kann dann bei erhöhten Temperaturen erfolgen.

Die Erfindung wird nachstehend anhand von Beispielen, in denen für die thermoplastischen Massen unterschiedliche Polyoxymethylen enthaltende Bindemittel eingesetzt wurden, näher erläutert.

### Beispiel 1

Die Masse 1 B wies die folgende Zusammensetzung auf:
56,7 Vol-% einer Mischung aus 92 Gew.-% Carbonyleisenpulver und 8 Gew.-% Carbonylnickelpulver
43,3 Vol-% Binder enthaltend 79,7 Gew.-% Polyoximethylen mit 2 mol-% 1,3-Dioxepan; 4,4 Gew.-% Polyethylen und 15,9 Gew.-% Poly-1,3-dioxepan.

### Beispiel 2

Die zweite Masse 2B wies die folgende Zusammensetzung auf:
56,7 Vol-% einer Mischung aus 92 Gew.-% Carbonyleisenpulver und 8 Gew.-% Carbonylnickelpulver
43,3 Vol-% Binder enthaltend 75,3 Gew.-% Polyoximethylen mit 2 mol-% 1,3-Dioxepan; 8,4 Gew.-% Polyethylen und 16,3 Gew.-% Polydioxolan.

### Beispiel 3

Die dritte Masse 3B wies die folgende Zusammensetzung auf:
56,7 Vol-% einer Mischung aus 92 Gew.-% Carbonyleisenpulver und 8 Gew.-% Carbonylnickelpulver
43,3 Vol-% Binder enthaltend 70,0 Gew.-% Polyoximethylen mit 2 mol-% 1,3-Dioxepan; 10,0 Gew.-% Polyethylen und 20,0 Gew.-% Poly-1,3-dioxepan

### Beispiel 4

Die vierte Masse 4B wies die folgende Zusammensetzung auf:
57,5 Vol-% einer Mischung aus 92 Gew.-% Carbonyleisenpulver und 8 Gew.-% Carbonylnickelpulver
42,5 Vol-% Binder enthaltend 67,1 Gew.-% Polyoximethylen mit 2 mol-% 1,3-Dioxepan; 7,5 Gew.-% Polyethylen und 25,4 Gew.-% Poly-1,3-dioxepan.

### Beispiel 5 (Vergleichsbeispiel)

Die fünfte Masse 5B wies die folgende Zusammensetzung auf:
56,2 Vol-% einer Mischung aus 92 Gew.-% Carbonyleisenpulver und 8 Gew.-% Carbonylnickelpulver
43,8 Vol-% Binder enthaltend 89,9 Gew.-% Polyoximethylen mit 2 mol-% 1,3-Dioxepan und 10,1 Gew.-% Polyethylen.

### Beispiel 6 (Vergleichsbespiel)

Die sechste Masse 6B wies die folgende Zusammensetzung auf:
56,2 Vol-% einer Mischung aus 92 Gew.-% Carbonyleisenpulver und 8 Gew.-% Carbonylnickelpulver
43,8 Vol-% Binder enthaltend 92,6 Gew.-% Polyoximethylen mit 2 mol-% 1,3-Dioxepan; 5,1 Gew.-% Polyethylen und 2,3 Gew.-% Polytretrahydrofuran.

### Beispiel 7 (Vergleichsbespiel)

Die siebte Masse 7B wies die folgende Zusammensetzung auf:
56,2 Vol-% einer Mischung aus 92 Gew.-% Carbonyleisenpulver und 8 Gew.-% Carbonylnickelpulver
43,8 Vol-% Binder enthaltend 80 Gew.-% Polyoximethylen mit 2 mol-% 1,3-Dioxepan und 20 Gew.-% Poly-1,3-dioxepan.

Die Herstellung der Formulierungen 1 bis 7 erfolgte in einem Doppelwellenextruder mit 30 mm Wellendurchmesser und einer Wellendrehzahl von 70 Upm. Ca. 5,6 kg/h der bei 180°C aufgeschmolzenen Bindemittelzubereitung wurden in den Extruder dosiert. In einen seitlich an diesen Extruder angeflanschten zweiten Extruder, der mit einer Förderwendel für Pulver ausgerüstet war, wurden 40 kg/h des Eisen-/Nickelpulvers dosiert und bis zum Ende der Förderstrecke auf 170°C erwärmt.

Am Ende der Förderstrecke wurde das Metallpulver mit dem polymeren Bindemittel vermischt, die Mischung geschert, homogenisiert und als Stränge durch Düsen gepresst. Die Stränge wurden in einem Luftstrom abgekühlt und granuliert. Die so erhaltenen Granulate enthielten ca. 56 Vol.-% einer Mischung aus 92 Gew.-% Carbonyleisenpulver und 8 Gew.-% Carbonylnickelpulver.

### Untersuchung der Fließfähigkeit

Um einen möglichst praxisnahen Vergleich der Fließfähigkeit und damit der Verarbeitbarkeit der erfindungsgemäßen thermoplastischen Massen zu ermöglichen, wurde ein Teil der vorstehenden Massen mit einer sogenannten Fließspirale getestet. Dabei handelt es sich um ein Werkzeug mit einem spiralförmigen Fließweg. Dieses Spritzgusswerkzeug wurde auf einer handelsüblichen Spritzgussmaschine (Engel cc 90) unter Standardbedingungen abgespritzt. Dabei wurde das Werkzeug auf eine Temperatur T von 132°C (T < der Schmelztemperatur des Bindemittels) temperiert und die Spritzbedingungen wie Zylinder- und Düsentemperatur, Plastifizierzeit, Einspritzgeschwindigkeit und Werkzeugtemperatur wurden unverändert gehalten, um den unter identischen Bedingungen zurückgelegten Weg des Materials bestimmen zu können. Dieser zurückgelegte Weg (in cm) ist somit ein praxisnaher Test für die Fließfähigkeit des Materials unter Produktionsbedingungen. Am Ende der Fließspirale zeigen sich je nach Zusammensetzung mehr oder weniger stark ausgeprägte Entmischungserscheinungen. Die Länge und Ausprägung dieser Entmischungserscheinungen wurde als qualitatives Maß zur Beschreibung der Entmischungsneigung der Formmassen herangezogen. Die Ergebnisse sind in der nachstehenden Tabelle 1 zusammengefasst.

**Tabelle 1**

| Beispiel | Zusammensetzung Bindemittel | Fließweg [cm] | Entmischung |
|---|---|---|---|
| 1 | POM (2 mol-% 1,3-Dioxepan); PE; 1,3-Polydioxepan | 25 | schwach |
| 2 | POM (2 mol-% 1,3-Dioxepan); PE; 1,3-Polydioxolan | 24 | schwach |
| 3 | POM (2 mol-% 1,3-Dioxepan); PE; 1,3-Polydioxepan | 27 | schwach |
| 4 | POM (2 mol-% 1,3-Dioxepan); PE; 1,3-Polydioxepan | 27 | schwach |
| 5 | POM (2 mol-% 1,3-Dioxepan); PE; | 18 | sehr stark |
| 6 | POM (2 mol-% 1,3-Dioxepan), PE; PTHF | 22 | stark |
| 7 | POM (2 mol-% 1,3-Dioxepan); 1,3-Polydioxepan | 23 | stark |

Die Ergebnisse zeigen, dass der Fließweg bei den Formassen auf Basis POM-Polyethylen-Polydioxepan und POM- Polyethylen-Polydioxolan gegenüber den Vergleichsbeispielen deutlich verbessert wird; außerdem wird die Tendenz zur Entmischung vermindert.

### Spritzversuche an realen Bauteilen

Mit den erfindungsgemäßen thermoplastischen Massen konnte auch unter produktionsähnlichen Bedingungen an realen Bauteilen eine deutliche Verbesserung der Verarbeitbarkeit beim Spritzgießen erreicht werden. Insbesondere wurde ein breiteres Verarbeitungsfenster beobachet: insbesonders kann die Werkzeugtemperatur in einem breiteren Temperaturbereich gewählt werden. Entmischungen wie sie inbesondere in Angußnähe häufig zu beobachten sind traten mit den Formmassen aus den Beispielen 1 bis 4 deutlich weniger auf als in den Vergleichsbeispielen 5 bis 7. Während mit den Formassen aus den Vergleichsbeispielen an kritischen Bauteilen zuweilen Spannungsrisse beobachtet wurden, waren die Formteile aus den Massen der Beispiele 1 bis 4 in jedem Fall rißfrei.

### Untersuchung der Oberflächenrauhigkeit

Entmischungen führen nach dem Entbindern und Sintern zu Oberflächenrauhigkeiten, die insbesondere bei Sichtteilen, z. B. in Cosumerartikeln, eine aufwendige Nachbearbeitung durch Polieren erforderlich machen. Aus den o. g. Formmassen gemäß Beispiel 1 bis 7 wurden Plättchen gespritzt und diese anschließend entbindert und gesintert. Danach wurde in einem Bereich von 8 x 13 mm in Angußnähe die maximale Rauhigkeitsprofilhöhe Rz gemäß DIN EN ISO 4287 bestimmt. Die mittleren Rz-Werte sind in Tabelle 2 wiedergegeben.

**Tabelle 2**

| Beispiel | Zusammensetzung Bindemittel | Rz (µm) |
|---|---|---|
| 1 | POM (2 mol-% 1,3-Dioxepan); PE; 1,3-Polydioxepan | 2,2 |
| 2 | POM (2 mol-% 1,3-Dioxepan); PE; 1,3-Polydioxolan | 2,0 |
| 3 | POM (2 mol-% 1,3-Dioxepan); PE; 1,3-Polydioxolan | 2,3 |
| 4 | POM (2 mol-% 1,3-Dioxepan); PE; 1,3-Polydioxepan | 2,4 |
| 5 | POM (2 mol-% 1,3-Dioxepan); PE; | 3,5 |
| 6 | POM (2 mol-% 1,3-Dioxepan), Polyethylen, PTHF | 3,2 |
| 7 | POM (2 mol-% 1,3-Dioxepan); 1,3-Polydioxepan | 3,7 |

Erfahrungsgemäß sind Rz-Werte≤ 2,5 µm ein Indiz dafür, dass sich aus dem gesinterten Bauteil mit sehr geringem Polieraufwand ein qualitativ hochwertiges Produkt mit sehr glatter Oberfläche erzielen läßt, die z. B. den Ansprüchen an viele Consumerartikel genügt. Die Formmassen aus den Beispielen 1 bis 4 weisen Rz-Werte ≤ 2,5 µm auf und bieten damit einen erheblichen Vorteil bei der Herstellung von Bauteilen mit hoher Oberflächengüte.

Untersuchung der Entbinderungsgeschwindigkeit und der Formstabilität beim Entbindern

Eine wichtige Forderung an die verbesserte Rezeptur war die Sicherstellung einer hohen Entbinderungsgeschwindigkeit sowie die Formstabilität beim Entbindern. Zur Bewertung des Verhaltens beim Entbindern wurden Plättchen mit 48 mm Länge, 15 mm Breite und 6 mm Dicke hergestellt und in einem Entbinderungsofen auf jeweils 2 Rollen so gelagert, dass der Abstand 42 mm betrug. Der Ofen wurde zunächst auf 110 °C aufgeheizt und für 30 min mit 500 1/h Stickstoff gespült. Dann wurden unter Aufrechterhaltung der Stickstoffspülung 30 ml/h an 98%-iger Salpetersäure zudosiert. Die Säurezufuhr wurde 2,5 h lang aufrecht erhalten; anschließend wurde der Ofen 45 min lang mit 500 l/h Stickstoff gespült und auf Raumtemperatur abgekühlt. Durch Durchbrechen der Teile und optische Begutachtung wurde festgestellt, dass alle Proben aus den Beispielen 1 bis 7 vollständig entbindert waren. Die erfindungsgemäßen Rezepturen nach Beispiel 1 bis 4 haben also keinen nachteiligen Effekt hinsichtlich der Entbinderungsgeschwindigkeit. Zur Bewertung der Formstabilität wurde die Durchbiegung der Proben begutachtet. An den Plättchen hergestellt nach Rezepturen gemäß Beispiel 1 bis 6 konnte keine meßbare Durchbiegung festgestellt werden; Plättchen gemäß Beispiel 7 waren unter ihrem Eigengewicht gebrochen. Das bedeutet, dass die erfindungsgemäßen Rezepturen mindestenes genauso formstabil beim Entbindern sind wie die Rezepturen aus den Vergleichbeispielen 5 und 6 und deutlich besser als Vergleichsbeispiel 7.

### Untersuchung der Grün- und Braunfestigkeit

Die Festigkeit von Bauteilen nach dem Spritzgießen (Grünfestigkeit) und nach dem Entbindern (Braunfestigkeit) ist für die Weiterverarbeitung von MIM-Bauteilen von großer Bedeutung: hohe Grün- und Braunfestigkeiten sind ein Indiz dafür, dass die Bauteile in den weiteren Verarbeitungsschritten problemlos gehandhabt werden können ohne dabei zu brechen. Zur Bestimmung der Grün- und Braunfestigkeit wurden Biegestäbe mit den Abmessungen 65 x 7 x 5 mm gespritzt und einer 4-Punktbiegeprüfung in Anlehnung an DIN EN 843 (Teil 1) unterzogen. Zur Bestimmung der Braunfestigkeit wurden die Biegestäbe zuvor (wie oben beschrieben) katalytisch entbindert. Die Ergebnisse sind in nachstehender Tabelle 3 zusammengefaßt:

**Tabelle 3**

| Beispiel | Zusammensetzung Bindemittel | Grünfestigkeit (MPa) | Braunfestigkeit (Mpa) |
|---|---|---|---|
| 1 | POM (2 mol-% 1,3-Dioxepan); PE; 1,3-Polydioxepan | 18,2 | 5,6 |
| 2 | POM (2 mol-% 1,3-Dioxepan); PE; 1,3-Polydioxolan | 16,6 | 5,3 |
| 3 | POM (2 mol-% 1,3-Dioxepan); PE; 1,3-Polydioxolan | 16,5 | 5,0 |
| 4 | POM (2 mol-% 1,3-Dioxepan); PE; 1,3-Polydioxepan | 16,4 | 5,1 |
| 5 | POM (2 mol-% 1,3-Dioxepan); PE; | 22,6 | 4,8 |
| 6 | POM (2 mol-% 1,3-Dioxepan), Polyethylen, PTHF | 7,4 | 4,0 |
| 7 | POM (2 mol-% 1,3-Dioxepan); 1,3-Polydioxepan | 6,5 | 1,2 |

Die Ergebnisse zeigen, dass die Grünfestigkeit durch Zugabe von Polydioxepan oder Polydioxolan allenfalls geringfügig vermindert wird (Beispiele 1 bis 4). Die Grünfestigkeit ist sogar deutlich besser als in den Vergleichsbeispielen 6 und 7. Die Braunfestigkeit wird sogar etwas verbessert.

## Patentansprüche

1. Bindemittel B) für pulverförmige Metalle oder Metalllegierungen oder deren Mischungen, enthaltend
B₁) 50 bis 96 Gew.-% eines oder mehrerer Polyoxymethylenhomo- oder -copolymerisate;
B₂) 2 bis 35 Gew.-% eines oder mehrerer Polyolefine;
B₃) 2 bis 40 Gew.-% Poly-1,3-dioxepan oder Poly-1,3-dioxolan oder deren Mischungen,
wobei die Summe der Gewichtsanteile der Komponenten B₁, B₂ und B₃ 100% ergibt.

2. Bindemittel nach Anspruch 1, **dadurch gekennzeichnet, dass** die Mischung 70 bis 85 Gew.-% der Komponente B₁), 4 bis 15 Gew.-% der Komponente B₂), und 10 bis 26 Gew.-% der Komponente B₃) enthält, wobei die Summe der Gewichtsanteile der Komponenten B₁, B₂ und B₃ 100% ergibt.

3. Bindemittel nach einem der Ansprüche 1 oder 2, **dadurch gekennzeichnet, dass** als Komponente B₁) ein Polyoxymethylencopolymerisat mit 0,01 bis 20 mol-% 1,3-Dioxepan oder 1,3-Dioxolan als Comonomer, als Komponente B₂) Polyethylen und als Komponente B₃) Poly-1,3-dioxepan oder Poly-1,3-dioxolan enthalten sind.

4. Thermoplastische Massen für die Herstellung metallischer Formkörper, enthaltend
A) 40 bis 70 Vol.-% eines sinterbaren pulverförmigen Metalls oder einer sinterbaren pulverförmigen Metallegierung oder deren Mischungen,
B) 30 bis 60 Vol.-% einer Mischung aus
B₁) 50 bis 96 Gew.-% eines oder mehrerer Polyoxymethylenhomo- oder copolymerisate;
B₂) 2 bis 35 Gew.-% eines oder mehrerer Polyolefine;
B₃) 2 bis 40 Gew.-% Poly-1,3-dioxepan oder Poly-1,3-dioxolan oder deren Mischungen als Bindemittel, wobei die Summe der Gewichtsanteile der Komponenten B₁, B₂ und B₃ 100% ergibt, und
C) 0 bis 5 Vol.-% eines Dispergierhilfsmittels.

5. Thermoplastische Massen nach Anspruch 4, **dadurch gekennzeichnet, dass** die Komponente B) 70 bis 85 Gew.-% der Komponente B₁), 4 bis 15 Gew.-% der Komponente B₂), und 10 bis 26 Gew.-% der Komponente B₃) enthält, wobei die Summe der Gewichtsanteile der Komponenten B₁, B₂ und B₃ 100% ergibt.

6. Thermoplastische Massen nach einem der Ansprüche 4 oder 5, **dadurch gekennzeichnet, dass** als Komponente B₁) ein Polyoxymethylencopolymerisat mit 0,01 bis 20 mol-% 1,3-Dioxepan als Comonomer,als Komponente B₂) Polyethylen und als Komponente B₃) Poly-1,3-dioxepan oder Poly-1,3-dioxolan enthalten sind.

7. Verwendung der thermoplastischen Massen, definiert gemäß einem der Ansprüche 4 bis 6 zur Herstellung von metallischen Formkörpern.

8. Metallische Formkörper, hergestellt aus thermoplastischen Massen, definiert gemäß einem der Ansprüche 4 bis 6.

9. Verfahren zur Herstellung einer thermoplastischen Masse, enthaltend als wesentliche Komponenten
A) 40 bis 70 Vol.-% eines sinterbaren pulverförmigen Metalls oder einer sinterbaren pulverförmigen Metallegierung oder deren Mischungen,
B) 30 bis 60 Vol.-% einer Mischung aus
B₁) 50 bis 96 Gew.-% eines oder mehrerer Polyoxymethylenhomo- oder -copolymerisate;
B₂) 2 bis 35 Gew.-% eines oder mehrerer Polyolefine;
B₃) 2 bis 40 Gew.-% Poly-1,3-dioxepan oder Poly-1,3-dioxolan oder deren Mischungen
als Bindemittel, wobei die Summe der Gewichtsanteile der Komponenten B₁, B₂ und B₃ 100% ergibt, und
C) 0 bis 5 Vol.-% eines Dispergierhilfsmittels,
**dadurch gekennzeichnet, dass** man
a₁) die Komponente B) bei Temperaturen von 150 bis 220 °C aufschmilzt und anschließend
b₁) die Komponente A) gegebenenfalls zusammen mit der Komponente C) bei Temperaturen im gleichen Bereich wie in Schritt a) zu dem Schmelzestrom der Komponente B) dosiert oder dass man.
a₂) die Komponenten B) und C) in Gegenwart der Komponente A) bei Temperaturen von 150 bis 220 °C aufschmilzt.

10. Verfahren zur Herstellung von Formkörpern aus einer thermoplastischen Masse, definiert gemäß einem der Ansprüche 4 bis 6, durch
a) Verformen der thermoplastischen Masse durch Spritzgießen, Extrudieren oder Verpressen zu einem Grünkörper,
b) Entfernen des Bindemittels durch Behandeln des Grünkörpers bei einer Temperatur im Bereich von 20 bis 180 °C für 0,1 bis 24 Stunden mit einer gasförmigen säurehaltigen Atmosphäre,
c) nachfolgendes Erhitzen für 0,1 bis 12 Stunden auf eine Temperatur im Bereich von 250 bis 600 °C und
d) nachfolgendes Sintern des so erhaltenen entbinderten Grünkörpers.

## Claims

1. A binder B) for pulverulent metals or metal alloys or mixtures thereof, which comprises
B₁) from 50 to 96% by weight of one or more polyoxymethylene homopolymers or copolymers;
B₂) from 2 to 35% by weight of one or more polyolefins;
B₃) from 2 to 40% by weight of poly-1,3-dioxepane or poly-1,3-dioxolane or mixtures thereof,
where the proportions by weight of the components B₁, B₂ and B₃ add up to 100%.

2. The binder according to claim 1, wherein the mixture comprises from 70 to 85% by weight of the component B₁), from 4 to 15% by weight of the component B₂), and from 10 to 26% by weight of the component B₃), where the proportions by weight of the components B₁, B₂ and B₃ add up to 100%.

3. The binder according to either claim 1 or 2, wherein a polyoxymethylene copolymer comprising from 0.01 to 20 mol% of 1,3-dioxepane or 1,3-dioxolane as comonomer is present as component B₁), polyethylene is present as component B₂) and poly-1,3-dioxepane or poly-1,3-dioxolane is present as component B₃).

4. A thermoplastic composition for producing shaped metallic bodies, which comprises
A) from 40 to 70% by volume of a sinterable pulverulent metal or a sinterable pulverulent metal alloy or mixtures thereof,
B) from 30 to 60% by volume of a mixture of
B₁) from 50 to 96% by weight of one or more polyoxymethylene homopolymers or copolymers;
B₂) from 2 to 35% by weight of one or more polyolefins;
B₃) from 2 to 40% by weight of poly-1,3-dioxepane or poly-1,3-dioxolane or mixtures thereof
as binder, where the proportions by weight of the components B₁, B₂ and B₃ add up to 100%, and
C) from 0 to 5% by volume of a dispersant.

5. The thermoplastic composition according to claim 4, wherein the component B) comprises from 70 to 85% by weight of the component B₁), from 4 to 15% by weight of the component B₂), and from 10 to 26% by weight of the component B₃), where the proportions by weight of the components B₁, B₂ and B₃ add up to 100%.

6. The thermoplastic composition according to either claim 4 or 5, wherein a polyoxymethylene copolymer comprising from 0.01 to 20 mol% of 1,3-dioxepane as comonomer is present as component B₁), polyethylene is present as component B₂) and poly-1,3-dioxepane or poly-1,3-dioxolane is present as component B₃).

7. The use of the thermoplastic composition defined according to any of claims 4 to 6 for producing shaped metallic bodies.

8. A shaped metallic body produced from a thermoplastic composition defined according to any of claims 4 to 6.

9. A process for producing a thermoplastic composition comprising as significant components
A) from 40 to 70% by volume of a sinterable pulverulent metal or a sinterable pulverulent metal alloy or mixtures thereof,
B) from 30 to 60% by volume of a mixture of
B₁) from 50 to 96% by weight of one or more polyoxymethylene homopolymers or copolymers;
B₂) from 2 to 35% by weight of one or more polyolefins;
B₃) from 2 to 40% by weight of ply-1,3-dioxepane or poly-1,3-dioxolane or mixtures thereof
as binder, where the proportions by weight of the components B₁, B₂ and B₃ add up to 100%, and
C) from 0 to 5% by volume of a dispersant,
wherein
a₁) the component B) is melted at temperatures of from 150 to 220°C and subsequently
b₁) the component A), optionally together with the component C), is metered into the melt stream of the component B) at temperatures in the same range as in step a₁) or
a₂) the components B) and C) are melted in the presence of the component A) at temperatures of from 150 to 220°C.

10. A process for producing shaped bodies from a thermoplastic composition defined according to any of claims 4 to 6 by
a) shaping the thermoplastic composition by injection molding, extrusion or pressing to form a green body,
b) removing the binder by treating the green body with a gaseous acid-comprising atmosphere at a temperature in the range from 20 to 180°C for from 0.1 to 24 hours,
c) subsequently heating the green body at a temperature in the range from 250 to 600°C for from 0.1 to 12 hours and
d) subsequently sintering the resulting green body which has been freed of binder in this way.

## Revendications

1. Liant B) pour métaux ou alliages de métaux en poudre ou leurs mélanges, contenant
B₁) 50 à 96% en poids d'un ou plusieurs homopolymérisats polyoxyméthylène ou copolymérisats de polyoxyméthylène ;
B₂) 2 à 35% en poids d'une ou plusieurs polyoléfines ;
B₃) 2 à 40% en poids de poly-1,3-dioxépane ou poly-1,3-dioxolane ou de mélanges de ceux-ci,
la somme des parties en poids des composants B₁, B₂ et B₃ étant égale à 100 %.

2. Liant selon la revendication 1, **caractérisé en ce que** le mélange contient 70 à 85 % en poids du composant B₁), 4 à 15 % en poids du composant B₂), et 10 à 26 % en poids du composant B₃), la somme des parties en poids des composants B₁, B₂ et B₃ étant égale à 100 %.

3. Liant selon la revendication 1, **caractérisé en ce que** sont contenus en tant que composant B₁) un copolymérisat de polyoxyméthylène comportant 0,01 à 20 % en moles de 1,3-dioxépane ou 1,3-dioxolane en tant que comonomère, en tant que composant B₂) du polyéthylène et en tant que composant B₃) du poly-1,3-dioxépane ou du poly-1,3-dioxolane.

4. Matières thermoplastiques pour la production de corps moulés métalliques, contenant
A) 40 à 70% en volume d'un métal en poudre apte au frittage ou d'un alliage métallique en poudre apte au frittage ou de mélanges de ceux-ci,
B) 30 à 60% en poids d'un mélange de
B₁) 50 à 96 % en poids d'un ou plusieurs homopolymérisats polyoxyméthylène ou copolymérisats de polyoxyméthylène ;
B₂) 2 à 35 % en poids d'une ou plusieurs polyoléfines ;
B₃) 2 à 40 % en poids de poly-1,3-dioxépane ou poly-1,3-dioxolane ou de mélanges de ceux-ci
en tant que liant, la somme des parties en poids des composants B₁, B₂ et B₃ étant égale à 100 %, et
C) 0 à 5 % en volume d'un adjuvant de dispersion.

5. Matières thermoplastiques selon la revendication 4, **caractérisées en ce que** le composant B) contient 70 à 85 % en poids du composant B₁), 4 à 15 % en poids du composant B₂), et 10 à 26 % en poids du composant B₃), la somme des parties en poids des composants B₁, B₂ et B₃ étant égale à 100 %.

6. Matières thermoplastiques selon la revendication 4 ou 5, **caractérisées en ce que** sont contenus en tant que composant B₁) un copolymérisat de polyoxyméthylène comportant 0,01 à 20 % en moles de 1,3-dioxépane en tant que comonomère, en tant que composant B₂) du polyéthylène et en tant que composant B₃) du poly-1,3-dioxépane ou du poly-1,3-dioxolane.

7. Utilisation des matières thermoplastiques définies selon l'une quelconque des revendications 4 à 6, pour la production de corps moulés métalliques.

8. Corps moulés métalliques, produits à partir de matières thermoplastiques définies selon l'une quelconque des revendications 4 à 6.

9. Procédé pour la production d'une matière thermoplastique, contenant comme composants essentiels
A) 40 à 70 % en volume d'un métal en poudre apte au frittage ou d'un alliage métallique en poudre apte au frittage ou de mélanges de ceux-ci,
B) 30 à 60% en poids d'un mélange de
B₁) 50 à 96 % en poids d'un ou plusieurs homopolymérisats polyoxyméthylène ou copolymérisats de polyoxyméthylène ;
B₂) 2 à 35 % en poids d'une ou plusieurs polyoléfines ;
B₃) 2 à 40% en poids de poly-1,3-dioxépane ou poly-1,3-dioxolane ou de mélanges de ceux-ci
en tant que liant, la somme des parties en poids des composants B₁, B₂ et B₃ étant égale à 100 %, et
C) 0 à 5 % en volume d'un adjuvant de dispersion,
**caractérisé en ce que**
a₁) on fait fondre à des températures de 150 à 220 °C le composant B) et ensuite
b₁) on ajoute par addition dosée au courant de masse fondue du composant B) le composant A) éventuellement conjointement avec le composant C), à des températures dans la même plage que dans l'étape a₁) ou **en ce que**
a₂) on fait fondre à des températures de 150 à 220 °C les composants B) et C) en présence du composant A).

10. Procédé pour la production de corps moulés à partie d'une matière thermoplastique définie selon l'une quelconque des revendications 4 à 6, par
a) mise en forme de la matière thermoplastique par moulage par injection, extrusion ou compression, en un corps cru,
b) élimination du liant par traitement du corps cru, à une température dans la plage de 20 à 180 °C pendant 0,1 à 24 heures avec une atmosphère gazeuse contenant un acide,
c) chauffage subséquent pendant 0,1 à 12 heures à une température dans la plage de 250 à 600 °C et
d) frittage subséquent du corps cru privé de liant ainsi obtenu.
